# EUROPÄISCHE PATENTANMELDUNG

(11) **EP 4 662 996 A1**
(43) Veröffentlichungstag der Anmeldung: **17.12.2025**
(21) Anmeldenummer: 25179342.8
(22) Anmeldetag: 28.05.2025
(51) Int. Cl.: A01C 23/04

(54) **UMFÜLL-VORRICHTUNG ZUM ANBRINGEN AN EIN LANDWIRTSCHAFTLICHES AUSBRINGFAHRZEUG SOWIE VERWENDUNG DER UMFÜLL-VORRICHTUNG**

(30) Priorität: 11.06.2024 DE 102024001894
(71) Anmelder: Zunhammer, Sebastian, 83301 Traunreut (DE)
(72) Erfinder: Zunhammer, Sebastian, 83301 Traunreut (DE)
(74) Vertreter: Einsiedler, Johannes

(57) **Zusammenfassung**

Die Erfindung betrifft eine Umfüll-Vorrichtung (1) zum Umfüllen von fließfähigen Medien, insbesondere Gülle, zwischen zwei Behältern und zum Anbringen an ein landwirtschaftliches Ausbringfahrzeug (20), mit mindestens einer Frontanbauaufnahme (2), die zum Anbau an eine Frontaufnahmeeinrichtung (21) des landwirtschaftlichen Ausbringfahrzeugs (20) eingerichtet ist sowie eine Verwendung einer solchen Umfüll-Vorrichtung (1).

## Beschreibung

Die vorliegende Erfindung betrifft eine Umfüll-Vorrichtung zum Umfüllen von fließfähigen Medien, insbesondere Gülle, zwischen zwei Behältern und zum Anbringen an ein landwirtschaftliches Ausbringfahrzeug.

Eine bekannte Umfüll-Vorrichtung zum Umfüllen von z.B. Gülle zwischen zwei Behältern und zum sehr einfachen Anbringen an ein landwirtschaftliches Ausbringfahrzeug vertreibt die Anmelderin unter der Vertriebsbezeichnung PROFI-Fant.

Eine weitere Umfüll-Vorrichtung zum Umfüllen von fließfähigen Medien, insbesondere Gülle, zwischen zwei Behältern und zum Anbringen an ein landwirtschaftliches Ausbringfahrzeug ist z.B. aus der DE 196 24 189 A1bekannt.

Nachteilig bei diesen Umfüll-Vorrichtungen ist es, dass ein Nasszerkleinerer mit Schwergutabscheider am zweiten und an das landwirtschaftliche Ausbringfahrzeug hinten angehängten Behälter angeordnet ist, z.B. an eine Ausbringanhänger. Dadurch wirkt das Gewicht des Nasszerkleinerers zusätzlich auf die hintere Anhängevorrichtung des Ausbringfahrzeugs. Häufig wird dann, für eine gleichmäßigere Radlast, am Ausbringfahrzeug zusätzlich noch ein Frontgewicht angebracht.

Der Erfindung liegt die Aufgabe zugrunde, eine Umfüll-Vorrichtung weiter zu verbessern und insbesondere eine verbesserte Gewichtsverteilung am Ausbringfahrzeug zu ermöglichen.

Diese Aufgabe wird erfindungsgemäß durch eine Umfüll-Vorrichtung gemäß Anspruch 1 gelöst, sowie durch eine Verwendung der Umfüll-Vorrichtung gemäß Anspruch 10. Vorteilhafte Ausführungsformen sind Gegenstand der abhängigen Ansprüche.

Die erfindungsgemäße Umfüll-Vorrichtung, die zum Umfüllen von fließfähigen Medien, insbesondere Gülle, zwischen zwei Behältern und zum Anbringen an ein landwirtschaftliches Ausbringfahrzeug vorgesehen ist, umfasst mindestens eine Frontanbauaufnahme, die zum Anbau an eine Frontaufnahmeeinrichtung des landwirtschaftlichen Ausbringfahrzeugs eingerichtet ist. Erfindungsgemäß umfasst die Frontanbauaufnahme einen Nasszerkleinerer mit Schwergutabscheider. Dadurch wird ermöglicht, dass das Gewicht des Nasszerkleinerers und des Schwergutabscheiders samt Schwergut nicht auf eine hintere Anhängevorrichtung des Ausbringfahrzeugs und somit auf dessen Hinterachse wirkt, sondern auf die Frontaufnahmeeinrichtung des Ausbringfahrzeugs - und somit auf dessen Vorderachse wirkt. Dadurch kann nicht nur das auf die Hinterachse des landwirtschaftlichen Ausbringfahrzeugs wirkende Gewicht reduziert werden, sondern auch auf ein zusätzliches Frontgewichts verzichtet werden. Des Weiteren kann somit ein besonders günstiger Strömungsweg der fließfähigen Medien, insbesondere Gülle, beim Umfüllen erreicht werden. Denn die Medien müssen nicht mehr wie bisher unmittelbar vor dem Eintritt in den zweiten Behälter nach unten zum Schwergutabscheider und dann wieder nach oben zu einer Eintrittsöffnung in den zweiten Behälter geführt werden. Insgesamt wird dadurch ermöglicht, die Umfüll-Vorrichtung weiter zu verbessern und insbesondere eine deutlich verbesserte Gewichtsverteilung am Ausbringfahrzeug zu erreichen.

Als Frontanbauaufnahme soll hier insbesondere nicht nur angesehen werden, was unmittelbar dazu dient die Verbindung zur Frontaufnahmeeinrichtung des landwirtschaftliches Ausbringfahrzeugs tatsächlich herzustellen. Vielmehr sollen hier insbesondere alle Merkmale als zu der Frontanbauaufnahme gehörig angesehen werden, die in einem Betrieb in Bezug auf eine Hauptfahrtrichtung sowie bei einem Umfüllen von fließfähigen Medien, vor-, direkt oberhalb oder (oberhalb-) unmittelbar hinter der Frontaufnahmeeinrichtung des landwirtschaftlichen Ausbringfahrzeugs angeordnet sind.

Unter einer Frontaufnahmeeinrichtung eines landwirtschaftliches Ausbringfahrzeug soll hier insbesondere ein Fronthubwerk einer landwirtschaftlichen Zugmaschine, z.B. eines Traktors, verstanden werden.

Unter einem Nasszerkleinerer soll hier eine Vorrichtung verstanden werden, die zum Zerkleinern von Faserstoffen und zum Abscheiden von Fremdstoffen bzw. Schwergut wie Steinen oder Metallteilen eingerichtet ist, insbesondere eine Vorrichtung, wie sie z.B. aus der EP 1 541 239 A1 bekannt ist.

In einer vorteilhaften Weiterbildung der erfindungsgemäßen Lösung ist der Nasszerkleinerer mit Schwergutabscheider oberhalb einer Frontaufnahmekopplung der Frontanbauaufnahme angeordnet. Dadurch kann ein Schwergutauffangbehälter für Schwergut wie Steine oder Metallteile, der vorteilhaft unterhalb des Schwergutauffangbehälters angeordnet ist, an oder oberhalb der Frontaufnahmekopplung an der Frontanbauaufnahme angeordnet sein. Dies wirkt sich nicht nur positiv auf die gesamte Gewichtsverteilung aus, sondern ermöglicht auch eine besonders vorteilhafte Bodenfreiheit.

In einer weiteren vorteilhaften Weiterbildung der erfindungsgemäßen Lösung ist zwischen dem Nasszerkleinerer mit Schwergutabscheider und der Frontanbauaufnahme oder der Frontaufnahmekopplung ein Trägerrohr angeordnet. Dadurch kann einerseits eine besonders stabile Aufnahme für den Nasszerkleinerer erreicht werden und andererseits das Trägerrohr zusätzlich zum Tragen einer Zuleitung und einer Weiterleitung für die fließfähigen Medien, insbesondere Gülle, zum Umfüllen zwischen den Behältern, genutzt werden.

In einer weiteren vorteilhaften Weiterbildung der erfindungsgemäßen Lösung umfasst das Trägerrohr einen Schwergutauffangbehälter für Schwergut wie Steine oder Metallteile, und/oder insbesondere einen dritten Behälter für einen Teil des fließfähigen Mediums. Dadurch kann das Trägerrohr zusätzlich dazu genutzt werden, den Schwergutauffangbehälter und/oder den dritten Behälter für einen Teil des fließfähigen Mediums zu implementieren. Dadurch kann nicht nur der Schwergutauffangbehälter und/oder der dritte Behälter für den Teil des fließfähigen Mediums besonders vorteilhaft angeordnet werden. Vielmehr kann dadurch einerseits ein Gewicht von aufgefangenem Schwergut als zusätzliches Frontgewicht am landwirtschaftlichen Ausbringfahrzeug genutzt werden und andererseits, zusätzlich oder wenn kein oder nur wenig Schwergut aufgefangen wurde, das Frontgewicht durch einen entsprechenden Teil des fließfähigen Mediums im dritten Behälter erreicht oder erhöht werden.

In einer weiteren vorteilhaften Weiterbildung der erfindungsgemäßen Lösung wird der Schwergutauffangbehälter und/oder der dritte Behälter, im Wesentlichen vollständig, durch das Trägerrohr gebildet. Dadurch kann eine sehr vorteilhafte Gewichtsverteilung bei einer gleichermaßen einfachen und besonders robusten Bauweise erreicht werden.

In einer weiteren vorteilhaften Weiterbildung der erfindungsgemäßen Lösung umfasst das Trägerrohr eine verschließbare Entnahmeöffnung für das Schwergut, insbesondere ausgebildet als Schieber. Durch die Anordnung der verschließbaren Entnahmeöffnung am Trägerrohr und damit an der Frontaufnahmekopplung bzw. der Frontanbauaufnahme ist die Entnahmeöffnung besonders einfach zugänglich und kann daher besonders einfach verschlossen, oder zum Entnehmen des Schwerguts geöffnet, werden. Durch diese Anordnung kann jedoch auch eine Entnahmestelle oder Abladestelle für das Schwergut besonders gezielt und einfach erreicht werden, da das landwirtschaftliche Ausbringfahrzeug einfach frontal geradeaus bis zum Erreichen der Entnahmestelle oder Abladestelle gelenkt werden kann.

In einer weiteren vorteilhaften Weiterbildung der erfindungsgemäßen Lösung umfasst die Umfüll-Vorrichtung einen Medienbeschleuniger. Durch die Anordnung des Medienbeschleunigers an der Umfüll-Vorrichtung kann nicht nur das Gewicht des Medienbeschleunigers zusätzlich auf die Frontaufnahmeeinrichtung des Ausbringfahrzeugs und somit auf dessen Vorderachse verteilt werden, sondern auch eine besonders strömungsgünstige Position des Medienbeschleunigers erreicht werden.

In einer weiteren vorteilhaften Weiterbildung der erfindungsgemäßen Lösung ist der Medienbeschleuniger als Flügelradpumpe ausgebildet. Durch die Ausbildung als Flügelradpumpe können nicht nur die fließfähigen Medien, insbesondere Gülle, besonders effektiv beschleunigt werden, sondern auch eine besonders vorteilhafte Abstimmung zwischen Beschleunigerleistung, strömungsgünstiger Position, dem Gewicht und dem Wirkungsort des Gewichts erreicht werden.

In einer weiteren vorteilhaften Weiterbildung der erfindungsgemäßen Lösung ist der Medienbeschleuniger so an der Umfüll-Vorrichtung platziert, dass er in einem Betrieb vor-, direkt oberhalb oder unmittelbar hinter der Frontanbauaufnahme oder direkt vor-, direkt oberhalb oder unmittelbar hinter einer Heckaufnahmeeinrichtung des landwirtschaftlichen Ausbringfahrzeugs angeordnet ist. Durch eine Anordnung im Bereich der Frontanbauaufnahme kann das Gewicht des Medienbeschleunigers auf die Frontaufnahmeeinrichtung des Ausbringfahrzeugs und somit auf dessen Vorderachse verteilt werden. Die Anordnung im Betrieb vor der Frontanbauaufnahme kann eine besonders strömungsgünstige Ausgestaltung ermöglichen, direkt oberhalb der Frontanbauaufnahme eine besonders einfache und robuste Anbindung ermöglichen und unmittelbar hinter der Frontanbauaufnahme eine besonders vorteilhafte Anordnung zum Schwergutauffangbehälter. Durch die Anordnung im Betrieb direkt vor, direkt oberhalb oder unmittelbar hinter einer Heckaufnahmeeinrichtung des landwirtschaftlichen Ausbringfahrzeugs kann hingegen eine Handhabung bei einem Anschluss an den ersten Behälter erleichtert werden.

Die Aufgabe wird auch gelöst durch eine Verwendung einer Umfüll-Vorrichtung nach der vorhergehenden Beschreibung zum Umfüllen von fließfähigen Medien, insbesondere Gülle, zwischen zwei Behältern, die sich dadurch auszeichnet, dass die Umfüll-Vorrichtung an eine Frontaufnahmeeinrichtung des landwirtschaftlichen Ausbringfahrzeugs angebracht ist. Dadurch können die genannten Vorteile nicht nur beim Umfüllen, sondern auch bei einer Feldfahrt mit dem Ausbringfahrzeug besonders zum Tragen kommen. Auch kann bei einem Gewicht des Nasszerkleinerers mit Schwergutabscheider von z.B. 500 kg und einem Frontgewicht von z.B. 500 kg das Gesamtgewicht des landwirtschaftlichen Ausbringfahrzeugs um z.B. 1000 kg verringert werden.

Insgesamt wird dadurch ermöglicht, die Umfüll-Vorrichtung weiter zu verbessern und insbesondere eine deutlich verbesserte Gewichtsverteilung am Ausbringfahrzeug zu erreichen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere sind die genannten Merkmale in diesem Rahmen jeweils nicht auf die genannte Anzahl oder Größe beschränkt, so dass in Einzahl genannte Merkmale durchaus mehrfach vorhanden und mehrfach vorkommende Merkmale auch in Einzahl vorhanden und die Größenverhältnisse abweichend sein können. Ein Ausführungsbeispiel der Erfindung ist in der Zeichnung rein schematisch dargestellt und wird nachfolgend näher beschrieben. Es zeigen:
- Fig. 1:: eine Seitenansicht einer schematisch dargestellten Ausgestaltung einer erfindungsgemäßen Umfüll-Vorrichtung an einem landwirtschaftlichen Ausbringfahrzeug in einer Grundstellung,
- Fig. 2:: eine Seitenansicht eines Teils der Umfüll-Vorrichtung nach Figur 1, ohne das landwirtschaftliche Ausbringfahrzeug, ebenfalls in der Grundstellung wie in Figur 1, und
- Fig. 3:: eine Seitenansicht wie Figur 2, jedoch mit einer Ausgestaltung der Umfüll-Vorrichtung mit einem Medienbeschleuniger und in einer Umfüll-Stellung.

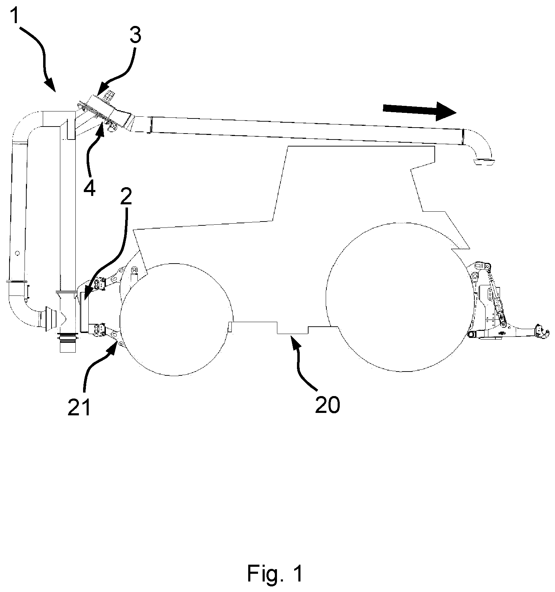

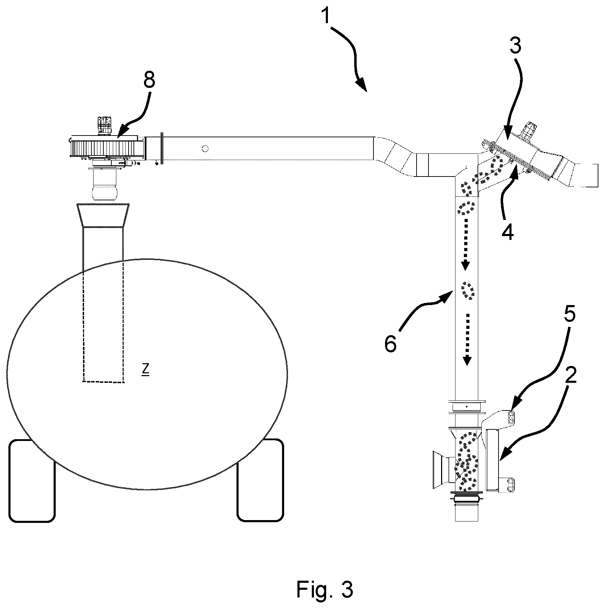

In der Figur 1 ist eine erfindungsgemäße Umfüll-Vorrichtung 1 zum Umfüllen von fließfähigen Medien, hier als Beilspiel von Gülle, zwischen zwei (nicht dargestellten) Behältern erkennbar, die an ein (schematisch dargestelltes) landwirtschaftliches Ausbringfahrzeug 20 mit einer Frontaufnahmeeinrichtung 21 angebracht ist. Hierzu ist eine Frontanbauaufnahme 2 der Umfüll-Vorrichtung 1 zum Anbau an die Frontaufnahmeeinrichtung 21 des landwirtschaftlichen Ausbringfahrzeugs 20 eingerichtet. Die Frontanbauaufnahme 2 umfasst einen Nasszerkleinerer 3 mit Schwergutabscheider 4. Dadurch wird ermöglicht, dass das Gewicht des Nasszerkleinerers 3 nicht auf eine hintere Anhängevorrichtung des Ausbringfahrzeugs 20 und somit auf dessen Hinterachse wirkt, sondern auf die Frontaufnahmeeinrichtung 21 des Ausbringfahrzeugs 20 und somit auf dessen Vorderachse. Dadurch kann das auf die Hinterachse des landwirtschaftlichen Ausbringfahrzeugs 20 wirkende Gewicht reduziert, auf das Anbringen eines zusätzlichen Frontgewichts verzichtet und gleichermaßen ein besonders günstiger Strömungsweg der Gülle beim Umfüllen ermöglicht werden. In Figur 1 ist die Umfüll-Vorrichtung 1 in einer Grundstellung dargestellt, in der sie für eine Feldfahrt oder ein Abstellen "eingeklappt" angeordnet ist. Eine Umfüll-Stellung, in der die Umfüll-Vorrichtung 1 "ausgeklappt" angeordnet ist um die Gülle vom ersten Behälter (einem Zubringerbehälter) in den zweiten Behälter (einem Ausbringbehälter) umzufüllen, wird in Figur 3 ersichtlich. In Figur 1 ist eine in Grundstellung gebrachte Zuleitung erkennbar, die links des Nasszerkleinerers 3 dargestellt ist und zum Umfüllen die Verbindung zum Zubringerbehälter herstellen kann. In der Figur 1 ist auch ein Großteil einer Weiterleitung für die umzufüllende Gülle erkennbar, die rechts des Nasszerkleinerers 3 dargestellt ist und oberhalb einer Fahrerkabine des landwirtschaftlichen Ausbringfahrzeugs 20 nach hinten verläuft. Sie stellt die Verbindung zum Ausbringbehälter mit Gülleverteiler dar, der zum Ausbringen z.B. als (nicht dargestellter) Anhänger am Ausbringfahrzeug 20 angehängt ist. Der in Figur 1 oberhalb der Weiterleitung erkennbare Pfeil stilisiert dabei eine Flussrichtung der Gülle beim Umfüllen und zeigt daher in Richtung des Ausbringbehälters bzw. des genannten Anhängers.

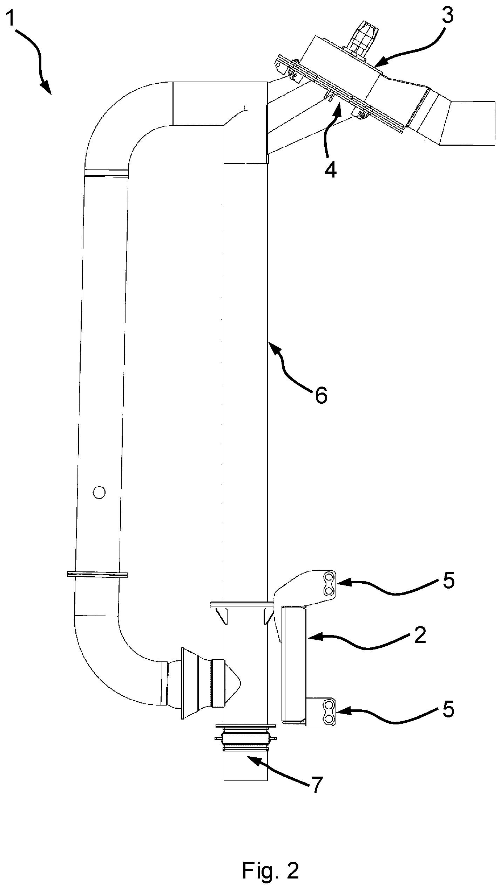

Wie in Figur 2 erkennbar, ist der Nasszerkleinerer 3 mit Schwergutabscheider 4 oberhalb einer Frontaufnahmekopplung 5 der Frontanbauaufnahme 2 angeordnet. Dadurch ist auch ein Schwergutauffangbehälter 6 für Schwergut wie Steine oder Metallteile (nur in Figur 3 stilisiert dargestellt, verlagert sich entlang der ebenfalls in Figur 3 gestrichelt dargestellten Pfeile durch die Schwerkraft nach unten) vorteilhaft unterhalb des Schwergutabscheiders 4 und zumindest teilweise oberhalb der Frontaufnahmekopplung 5 der Frontanbauaufnahme 2 angeordnet. Dabei ist zwischen dem Nasszerkleinerer 3 mit Schwergutabscheider 4 und der Frontaufnahmekopplung 5 ein Trägerrohr 6 angeordnet, das zusätzlich zum Tragen der Zuleitung (in der Figur 2 links des Nasszerkleinerers 3) und der Weiterleitung (in der Figur 2 rechts des Nasszerkleinerers 3) genutzt wird. Das Trägerrohr 6 bildet vollständig einen Schwergutauffangbehälter und einen dritten Behälter für einen Teil der Gülle aus. Dadurch kann eine sehr vorteilhafte Gewichtsverteilung bei einer gleichermaßen einfachen und besonders robusten Bauweise erreicht werden. Somit kann einerseits ein Gewicht von aufgefangenem Schwergut als zusätzliches Frontgewicht am landwirtschaftlichen Ausbringfahrzeug 20 genutzt werden und andererseits, zusätzlich oder wenn kein oder nur wenig Schwergut aufgefangen wurde, das Frontgewicht durch einen entsprechenden Teil der Gülle im dritten Behälter erreicht oder erhöht werden. Das Trägerrohr 6 umfasst eine verschließbare Entnahmeöffnung 7 für das Schwergut, die z.B. als Schieber ausgebildet und besonders einfach zugänglich ist.

In Figur 3 ist eine Ausgestaltung der Umfüll-Vorrichtung 1 in der Umfüll-Stellung dargestellt, die einen Medienbeschleuniger 8 umfasst. In dieser Umfüll-Stellung ist die Umfüll-Vorrichtung 1 "ausgeklappt" angeordnet, um die Gülle vom ersten Behälter (dem Zubringerbehälter, hier stilisiert dargestellt und mit "Z" benannt) in den zweiten Behälter (den Ausbringbehälter, nicht dargestellt) umzufüllen. Durch die Anordnung des Medienbeschleunigers 8 an der Umfüll-Vorrichtung 1 wird das Gewicht des Medienbeschleunigers 8 zusätzlich auf die Frontaufnahmeeinrichtung 21 des Ausbringfahrzeugs 20 und somit auf dessen Vorderachse verteilt und eine besonders strömungsgünstige Position des Medienbeschleunigers 8 erreicht. Der Medienbeschleuniger 8 ist dabei als Flügelradpumpe ausgebildet und so an der Umfüll-Vorrichtung 1 platziert, dass er in einem Betrieb vor der Frontanbauaufnahme 2 angeordnet ist. So wird neben der besonders vorteilhaften Gewichtsverteilung auch eine besonders strömungsgünstige Ausgestaltung ermöglicht.

Somit wird es insgesamt ermöglicht, die Umfüll-Vorrichtung 1 weiter zu verbessern und besonders eine deutlich verbesserte Gewichtsverteilung am Ausbringfahrzeug 20 zu erreichen.

### Bezugszeichenliste

- 1: Umfüll-Vorrichtung
- 2: Frontanbauaufnahme
- 3: Nasszerkleinerer
- 4: Schwergutabscheider
- 5: Frontaufnahmekopplung
- 6: Trägerrohr
- 7: Entnahmeöffnung
- 8: Medienbeschleuniger

- 20: landwirtschaftliches Ausbringfahrzeug
- 21: Frontaufnahmeeinrichtung

## Patentansprüche

1. Umfüll-Vorrichtung (1) zum Umfüllen von fließfähigen Medien, insbesondere Gülle, zwischen zwei Behältern und zum Anbringen an ein landwirtschaftliches Ausbringfahrzeug (20), mit mindestens einer Frontanbauaufnahme (2), die zum Anbau an eine Frontaufnahmeeinrichtung (21) des landwirtschaftlichen Ausbringfahrzeugs (20) eingerichtet ist, **dadurch gekennzeichnet, dass** die Frontanbauaufnahme (2) einen Nasszerkleinerer (3) mit Schwergutabscheider (4) umfasst.

2. Umfüll-Vorrichtung (1) nach Anspruch 1, **dadurch gekennzeichnet, dass** der Nasszerkleinerer (3) mit Schwergutabscheider (4) oberhalb einer Frontaufnahmekopplung (5) der Frontanbauaufnahme (2) angeordnet ist.

3. Umfüll-Vorrichtung (1) nach Anspruch 2, **dadurch gekennzeichnet, dass** zwischen dem Nasszerkleinerer (3) mit Schwergutabscheider (4) und der Frontaufnahmekopplung (5) und/oder der Frontanbauaufnahme (2) ein Trägerrohr (6) angeordnet ist.

4. Umfüll-Vorrichtung (1) nach Anspruch 3, **dadurch gekennzeichnet, dass** das Trägerrohr (6) einen Schwergutauffangbehälter für Schwergut wie Steine oder Metallteile, und/oder insbesondere einen dritten Behälter für einen Teil des fließfähigen Mediums, umfasst.

5. Umfüll-Vorrichtung (1) nach Anspruch 4, **dadurch gekennzeichnet, dass** der Schwergutauffangbehälter und/oder der dritte Behälter, im Wesentlichen vollständig, durch das Trägerrohr (6) gebildet wird.

6. Umfüll-Vorrichtung (1) nach einem der Ansprüche 4 bis 5, **dadurch gekennzeichnet, dass** das Trägerrohr (6) eine verschließbare Entnahmeöffnung (7) für Schwergut, insbesondere ausgebildet als Schieber, umfasst.

7. Umfüll-Vorrichtung (1) nach einem der Ansprüche 1 bis 6, **dadurch gekennzeichnet, dass** sie einen Medienbeschleuniger (8) umfasst.

8. Umfüll-Vorrichtung (1) nach Anspruch 7, **dadurch gekennzeichnet, dass** der Medienbeschleuniger (8) als Flügelradpumpe ausgebildet ist.

9. Umfüll-Vorrichtung (1) nach den Ansprüchen 7 oder 8, **dadurch gekennzeichnet, dass** der Medienbeschleuniger (8) so an der Umfüll-Vorrichtung (1) platziert ist, dass er in einem Betrieb vor-, direkt oberhalb oder unmittelbar hinter der Frontanbauaufnahme (2) oder direkt vor-, direkt oberhalb oder unmittelbar hinter einer Heckaufnahmeeinrichtung des landwirtschaftlichen Ausbringfahrzeugs (20) angeordnet ist.

10. Verwendung einer Umfüll-Vorrichtung (1) nach einem der vorhergehenden Ansprüche zum Umfüllen von fließfähigen Medien, insbesondere Gülle, zwischen zwei Behältern, **dadurch gekennzeichnet, dass** die Umfüll-Vorrichtung (1) an eine Frontaufnahmeeinrichtung (21) eines landwirtschaftlichen Ausbringfahrzeugs (20) angebracht ist.
